# EUROPEAN PATENT SPECIFICATION

(11) **EP 3 666 848 B1**
(45) Date of publication and mention of the grant of the patent: **15.11.2023**
(21) Application number: 18844880.7
(22) Date of filing: 02.08.2018
(51) Int. Cl.: C09K 5/04, F25B 1/00

(54) **WORKING MEDIUM FOR REFRIGERATION CYCLE, AND REFRIGERATION CYCLE SYSTEM**
ARBEITSMEDIUM FÜR KÄLTEKREISLAUF UND KÄLTEKREISLAUFSYSTEM
FLUIDE ACTIF POUR CYCLE DE RÉFRIGÉRATION ET SYSTÈME À CYCLES DE RÉFRIGÉRATION

(30) Priority: 10.08.2017 JP 2017155056
(43) Date of publication of application: 17.06.2020
(73) Proprietor: Panasonic Intellectual Property Management Co., Ltd., Osaka-shi, Osaka 540-6207 (JP)
(72) Inventor: SATO, Shigehiro, Osaka-shi, Osaka 540-6207 (JP); NAKANO, Yukio, Osaka-shi, Osaka 540-6207 (JP)
(74) Representative: Eisenführ Speiser
(86) International application number: PCT/JP2018/028951
(87) International publication number: WO 2019/031370

(56) References cited:
- EP-A1- 3 112 438
- WO-A1-2016/194847
- WO-A1-2016/194847
- JP-A- 2008 504 373
- JP-A- 2014 098 166
- JP-A- 2015 232 318
- JP-A- 2017 145 380
- JP-A- 2018 104 565

## Description

### TECHNICAL FIELD

The present disclosure relates to a working medium for a refrigeration cycle that is capable of effectively suppressing or reducing a disproportionation reaction of 1,1,2-trifluoroethylene, and to a refrigeration cycle system including the working medium.

### BACKGROUND ART

As a working medium for a refrigeration cycle (also referred to as a refrigerant or a heat medium), a hydrochlorofluorocarbon (HCFC) has been used before. The HCFC, however, has large influence on ozone depletion. Therefore, used in recent years is a hydrofluorocarbon (HFC) having an ozone depletion potential (hereinafter, ODP) of zero (0). Atypical HFC is, for example, mixed refrigerant R410A (a refrigerant number based on Standard 34 of American Society of Heating, Refrigerating and Air-Conditioning Engineers (ASHRAE)).

R410A, however, has a large global warming potential (hereinafter, GWP), and therefore, recently proposed is use of a hydrofluoroolefin (HFO) having a smaller GWP. For example, PTL 1 discloses use of 1,1,2-trifluoroethylene (HFO1123) as the HFO. PTL 1 also discloses combination use of 1,1,2-trifluoroethylene together with HFCs such as difluoromethane (HFC32, R32).

Compared to, for example, a conventional HFC, 1,1,2-trifluoroethylene has low stability to be less likely to remain in air. Therefore, 1,1,2-trifluoroethylene is small in ODP and GWP.

As suggested in PTL 2, however, 1,1,2-trifluoroethylene is known to have low stability and be likely to generate, due to this low stability, a self-polymerization reaction (hereinafter, described as a disproportionation reaction) called a disproportionation reaction of 1,1,2-trifluoroethylene.

Further, the disproportionation reaction is known to be easily induced by, for example, heat generation that is caused during use of the working medium for a refrigeration cycle and to be further made into a chain reaction due to large heat emission accompanied by the generation of the disproportionation reaction. The generation of the chain disproportionation reaction causes a large amount of soot which possibly lowers reliability of, for example, a refrigeration cycle system or a compressor constituting this system.

PTL3 discloses a composition for a heat cycle system, which comprises a working fluid for heat cycle containing trifluoroethylene, and a radical scavenger, and a heat cycle system employing the composition for a heat cycle system.

PTL4 discloses a working medium for thermal cycling, a composition for a thermal cycle system, and a thermal cycle system using the composition.

### Citation List

### Patent Literatures

PTL 1: International Publication No. 2012/157764
PTL 2: International Publication No. 2015/141679
PTL 3: European Publication No. 3 112 438
PTL 4: International Publication No. 2016/194847
PTL 5: Japanese Publication No. 2018 104565 A

PTL 5, which does not belong to the prior art, describes a refrigeration cycle working medium capable of effectively suppressing or alleviating disproportionation reaction of 1,1,2-trifluoroethylene, and a refrigeration cycle system using the same.

### SUMMARY OF THE INVENTION

The present disclosure provides a working medium for a refrigeration cycle that is capable of effectively suppressing or reducing a disproportionation reaction of 1,1,2-trifluoroethylene even under higher temperature conditions, when 1,1,2-trifluoroethylene and difluoromethane are used in combination as refrigerant components, and provides a refrigeration cycle system including the working medium.

A working medium for a refrigeration cycle according to the present invention is defined in appended claim 1. A refrigeration cycle system according to the present invention is defined in appended claim 3.

This configuration enables the working medium to effectively suppress or reduce the disproportionation reaction of the (A) 1,1,2-trifluoroethylene not only in a temperature range under normal use conditions but also in a higher temperature range, under higher than or equal to 150°C temperature conditions.

### BRIEF DESCRIPTION OF DRAWINGS

FIG. 1 is a ternary phase diagram of (A) 1,1,2-trifluoroethylene, (B) difluoromethane, and (C) a haloalkane in a refrigeration cycle system, the diagram indicating a region S1 as a composition range of the components (A) to (C).
FIG. 2 is a diagram that indicates the region S1 indicated in FIG. 1 as a region surrounded by lines.
FIG. 3 is a diagram indicating a region S2 within the composition range of the components (A) to (C) that corresponds to FIG. 1.
FIG. 4 is a diagram indicating a region S3 within the composition range of the components (A) to (C) that corresponds to FIG. 1.
FIG. 5 is a diagram indicating a region S4 within the composition range of the components (A) to (C) that corresponds to FIG. 1.
FIG. 6A is a block configuration diagram schematically illustrating one example of a refrigeration cycle system according to one exemplary embodiment of the present disclosure.
FIG. 6B is a block configuration diagram schematically illustrating another example of the refrigeration cycle system according to the one exemplary embodiment of the present disclosure.

### DESCRIPTION OF EMBODIMENTS

### (Knowledge underlying the present disclosure)

The inventors of the present invention and the like have obtained a following knowledge as a result of earnest studies on a refrigerant containing 1,1,2-trifluoroethylene and difluoromethane in combination.

A disproportionation reaction of 1,1,2-trifluoroethylene is mostly unknown. The disproportionation reaction is a reaction including, as described later, a self-degradation reaction of 1,1,2-trifluoroethylene and a polymerization reaction following this self-degradation reaction.

For example, PTL 2, however, describes the disproportionation reaction simply as a "self-polymerization reaction," and does not include specific contents of studies on suppression of the disproportionation reaction. Contents disclosed in PTL 2 is considered to involve a decrease in generation frequency of the "self-polymerization reaction" that is caused by a decrease in content of 1,1,2-trifluoroethylene relative to a total amount of a working medium due to mixing of difluoromethane in the working medium, rather than suppression of the very generation of the disproportionation reaction.

Further, PTL 2 describes that when the working medium for a thermal cycle that contains 1,1,2-trifluoroethylene and difluoromethane in combination is applied to a thermal cycle system, a temperature condition for allowing use of the working medium as a working refrigerant for a thermal cycle is about lower than or equal to 130°C.

As the result of the earnest studies, however, the inventors of the present invention have obtained a knowledge that it is necessary to suppress the disproportionation reaction of 1,1,2-trifluoroethylene also under higher than 130°C temperature conditions, depending on various conditions expected when a compressor is used in the thermal cycle.

PTL 1 does not particularly disclose any specific temperature conditions.

Based on the new knowledge, the inventors of the present invention have come to disclose a following finding.

A working medium for a refrigeration cycle according to the invention contains three components: (A) 1,1,2-trifluoroethylene and (B) difluoromethane as refrigerant components; and (C) a haloalkane having 1 to 4 carbon atoms but excluding a case where one or more halogen atoms are all fluorine as a disproportionation inhibitor capable for suppressing a disproportionation reaction under higher than or equal to 150°C temperature conditions, when a ternary phase diagram according to triangular coordinates (A, B, C) represents mass-ratio composition of the three components: (A) the 1,1,2-trifluoroethylene; (B) the difluoromethane; and (C) the haloalkane, the mass-ratio composition of the three components having a composition range that corresponds to a combined region formed of: a first overlapping region where a region a and a region b overlap one another, with the region a representing more than 0 mass% and less than or equal to 65 mass% of the (A) 1,1,2-trifluoroethylene, and the region b representing more than 0 mass% and less than or equal to 30 mass% of (B) the difluoromethane; and a second overlapping region where a region c and the region b overlap one another, with the region c representing more than or equal to 20 mass% and less than 100 mass% of (C) the haloalkane, wherein the haloalkane is at least any selected from the group consisting of diiodomethane CH2I2, difluorodiiodomethane CF2I2, 1-bromo-2-iodotetrafluoroethane CF2BrCF2I, 1,1,1-trifluoro-2-iodoethane CF3(CH2)I, 1,1,1-trifluoro-3-iodopropane CF3(CH2)2I, and 1,1,1-trifluoro-3-iodobutane CF3(CH2)3I.

This configuration enables the working medium to effectively suppress or reduce the disproportionation reaction of (A) the 1,1,2-trifluoroethylene not only in a temperature range under normal use conditions but also in a higher temperature range, under higher than or equal to 150°C temperature conditions. Further, the working medium for a refrigeration cycle is capable of having a global warming potential (GWP) in an appropriate range.

In the working medium according to the invention, the mass-ratio composition of the three components formed of (A) the 1,1,2-trifluoroethylene, (B) the difluoromethane, and (C) the haloalkane is within a composition range corresponding to a region surrounded by: a line L1 representing 30 mass% of (B) the difluoromethane; a line L3 connecting between a point p2 as (A, B, C) = (65, 15, 20) and a point p3 as (A, B, C) = (65, 30, 5) on the line L1; and a line L5 connecting between a point p6 as (A, B, C) = (50, 30, 20) on the line L1 and the point p2.

When the composition of the components (A) to (C) is within the composition range, it is possible to effectively suppress or reduce the disproportionation reaction of (A) the 1,1,2-trifluoroethylene even under temperature conditions of a higher temperature range. Further, it is possible to give the working medium for a refrigeration cycle having a GWP in an appropriate range and having excellent refrigerant performance.

The working medium for a refrigeration cycle having a configuration according to an embodiment of the present invention is configured as: the mass-ratio composition of the three components formed of (A) the 1,1,2-trifluoroethylene, (B) the difluoromethane, and (C) the haloalkane is within a composition range corresponding a region surrounded by the line L1, the Line L5, and a line L6 connecting between a point p7 (A, B, C) = (60, 30, 10) on the line L1 and the point p2.

When the composition of the components (A) to (C) is within the composition range, it is possible to effectively suppress or reduce the disproportionation reaction of (A) the 1,1,2-trifluoroethylene even under temperature conditions of a higher temperature range. Further, it is possible to give the working medium for a refrigeration cycle having a GWP in an appropriate range and having excellent refrigerant performance.

The working medium for a refrigeration cycle according to the present invention makes it possible to excellently attain the suppression of the disproportionation reaction or the reduction of progression of the disproportionation reaction.

The working medium for a refrigeration cycle according to the present invention includes a haloalkane that is capable of excellently attaining the suppression of the disproportionation reaction or the reduction of progression of the disproportionation reaction or that is less likely to be restricted in terms of availability or handleability.

The working medium for a refrigeration cycle according to the present invention includes a haloalkane that is capable of excellently attaining the suppression of the disproportionation reaction or the reduction of progression of the disproportionation reaction or that is less likely to be restricted in terms of availability or handleability.

The working medium for a refrigeration cycle according to the present invention includes a haloalkane that is capable of excellently attaining the suppression of the disproportionation reaction or the reduction of progression of the disproportionation reaction even in a higher temperature range, under higher than or equal to 150°C temperature conditions.

Further, the present invention includes a refrigeration cycle system configured to include the working medium of the present invention or embodiment thereof.

This configuration, i.e., the configuration allowing the refrigeration cycle system to include the working medium for a refrigeration cycle described above is capable of attaining an efficient refrigeration cycle system and improving reliability of the refrigeration cycle system.

Hereinafter, a typical exemplary embodiment of the present disclosure is specifically described. A working medium for a refrigeration cycle according to the present disclosure contains (A) 1,1,2-trifluoroethylene and (B) difluoromethane as refrigerant components. Further, the working medium for a refrigeration cycle contains (C) a haloalkane as specified herein.

(C) The haloalkane is used as a disproportionation inhibitor for suppressing a disproportionation reaction of (A) the 1,1,2-trifluoroethylene.

In other words, the working medium for a refrigeration cycle according to the present disclosure contains, as refrigerant components, two components: the components (A) and (B) and contains the component (C), and has composition including these three components (A) to (C) as essential components. The working medium for a refrigeration cycle according to the present disclosure may contain, as a refrigerant component, a component other than the components (A) to (C).

### [Refrigerant component]

A working medium for a refrigeration cycle according to the present invention contains, as refrigerant components, at least two components: (A) 1,1,2-trifluoroethylene (HFO1123) and (B) difluoromethane (HFC32, R32).

(A) The 1,1,2-trifluoroethylene of these components has a structure represented by a following formula (2). (A) The 1,1,2-trifluoroethylene has a structure obtained by substituting two hydrogen atoms (H) bonded to a carbon atom (C [element symbol]) at 1-position of ethylene with fluorine (F) and substituting one of two hydrogen atoms bonded to a carbon atom at 2-position with fluorine.

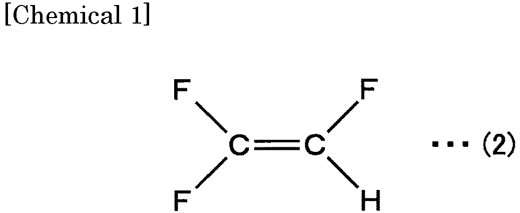

(A) The 1,1,2-trifluoroethylene contains a carbon-carbon double bond. A photochemical reaction of ozone in air produces a hydroxyl radical (OH radical). The double bond of (A) the 1,1,2-trifluoroethylene is easily broken by this hydroxyl radical. Therefore, (A) the 1,1,2-trifluoroethylene has less influence on ozone depletion and global warming.

Such (A) 1,1,2-trifluoroethylene is a "main component (main refrigerant component)" of the refrigerant components in the working medium for a refrigeration cycle according to the present disclosure. On the other hand, (B) the difluoromethane can be defined as an "accessory component (accessory refrigerant component) of the refrigerant components in the working medium for a refrigeration cycle according to the present disclosure. As described above, (B) the difluoromethane has a smaller (zero) ozone depletion potential (ODP) than a hydrochlorofluorocarbon (HCFC) that has been used so far and has excellent refrigerant performance.

The working medium for a refrigeration cycle according to the present disclosure may contain, as a refrigerant component, "another refrigerant component" other than the components (A) and (B). Examples of another typical refrigerant component include hydrofluorocarbons (HFCs) such as difluoroethane, trifluoroethane, tetrafluoroethane, pentafluoroethane, pentafluoropropane, hexafluoropropane, heptafluoropropane, pentafluorobutane, and heptafluorocyclopentane; and hydrofluoroolefins (HFOs) such as monofluoropropene, trifluoropropene, tetrafluoropropene, pentafluoropropene, and hexafluorobutene. Another refrigerant component, however, is not particularly limited.

Both the HFCs and HFOs are known to have less influence on ozone depletion and global warming, and it is possible to use as, a refrigerant component, these HFCs and HFOs in combination with the 1,1,2-trifluoroethylene. The other refrigerant components described above may be used singly or in appropriate combination of two or more refrigerant components.

Here, (A) the 1,1,2-trifluoroethylene is known to cause a rapid disproportionation reaction due to the excellent degradability described above. The disproportionation reaction of (A) the 1,1,2-trifluoroethylene refers to, for example, generation of a self-degradation reaction in which a molecule of (A) the 1,1,2-trifluoroethylene is degraded, and a polymerization reaction that is generated following this self-degradation reaction and in which carbon generated by the degradation is polymerized to form soot.

When an active radical is generated by, for example, heat generation in a high-temperature and high-pressure state, this active radical reacts with (A) the 1,1,2-trifluoroethylene to generate the disproportionation reaction described above. This disproportionation reaction is accompanied by heat generation, so that this heat generation generates an active radical. This results in another disproportionation reaction induced by this active radical. Thus, the generation of an active radical and the generation of the disproportionation reaction are chained to make the disproportionation reaction progress rapidly.

The result of the earnest studies by the inventors of the present invention has made it clear that the active radical that induces the disproportionation reaction of (A) the 1,1,2-trifluoroethylene is mainly radicals such as a fluorine radical (F radical), a trifluoromethyl radical (CF₃ radical), and difluoromethylene radical (CF₂ radical).

Therefore, the inventors of the present invention have attempted to suppress or reduce the rapid disproportionation reaction by adding, to the working medium for a refrigeration cycle, a substance (disproportionation inhibitor) capable of efficiently capturing, for example, the F radical, the CF₃ radical, and the CF₂ radical under conditions of combination use of (A) the 1,1,2-trifluoroethylene and (B) the difluoromethane as the refrigerant components.

This attempt has resulted in uniquely finding that the disproportionation reaction can be effectively suppressed as described later by adding, as the disproportionation inhibitor, a component (C), i.e. a haloalkane as specified herein.

### [Disproportionation inhibitor]

The working medium for a refrigeration cycle according to the present disclosure contains, as a disproportionation inhibitor for suppressing the disproportionation reaction of (A) the 1,1,2-trifluoroethylene described above, (C) a haloalkane as specified herein. The component (C), or the haloalkane is simply abbreviated as the "(C) haloalkane" for convenience of description.

As described later, use of (C) the haloalkane as the disproportionation inhibitor is capable of attaining the suppression or the reduction of progression of the disproportionation reaction even with a small amount of (C) the haloalkane added.

(C) The haloalkane used as the disproportionation inhibitor in the present invention is as specified in claim 1.

When (C) the haloalkane contains at least either one of Cl and Br, (C) the haloalkane tends to have a higher ozone depletion potential (ODP). Accordingly, (C) the haloalkane may possibly be restricted in terms of availability and handleability.

As described later, however, (C) the haloalkane added as the disproportionation inhibitor to the working medium for a refrigeration cycle according to the present invention is, even with a relatively small amount compared to the amount of the refrigerant components, capable of effectively suppressing the disproportionation reaction of (A) the 1,1,2-trifluoroethylene or reducing rapid progression of the disproportionation reaction.

Further, even when (C) the haloalkane is used in combination with another disproportionation inhibitor described later, an addition amount of the disproportionation inhibitors as a whole is sufficiently small compared to the amount of the refrigerant components. Therefore, even use of (C) the haloalkane having a relatively large ODP or GWP does not have significant influence on environment.

(C) The haloalkane is not particularly limited in terms of which one is to be used, as long as (C) the haloalkane is as specified in appended claim 1.

These haloalkanes may be used singly or in appropriate combination of two or more haloalkanes. In consideration of, for example, the availability, the ODP value, and the handleability, particularly preferably used among these haloalkanes is at least any selected from the group consisting of diiodomethane (CH₂I₂), difluorodiiodomethane (CF₂I₂), 1-bromo-2-iodotetrafluoroethane (CF₂BrCF₂I), 1,1,1-trifluoro-2-iodoethane (CF₃CH₂I), 1,1,1-trifluoro-3-iodopropane (CF₃(CH₂)₂I), and 1,1,1-trifluoro-3-iodobutane (CF₃(CH₂)₃I).

### [Other component usable in combination]

The working medium for a refrigeration cycle according to the present invention is used in a refrigeration cycle system. Therefore, the working medium for a refrigeration cycle may also contain, in addition to the components (A) to (C) described above, a lubricant (refrigerator oil) used for lubrication of a compressor included in the refrigeration cycle system.

The working medium for a refrigeration cycle according to the present disclosure only needs to be formed of, as described above, at least the refrigerant components including (A) the 1,1,2-trifluoroethylene as the "main component" and (B) the difluoromethane as the "accessory component," and the disproportionation inhibitor formed of (C) the haloalkane described above. Further, when the working medium for a refrigeration cycle contains the lubricant in combination, the mixture of the working medium is formed of the refrigerant components, the disproportionation inhibitor, and a lubricant component.

The working medium for a refrigeration cycle according to the present disclosure may also contain another component in addition to the refrigerant components, the disproportionation inhibitor, and the lubricant component described above.

In the working medium for a refrigeration cycle according to the present disclosure, the disproportionation inhibitor may be mixed in the refrigerant components or in the lubricant component.

A saturated hydrocarbon and a halomethane among the disproportionation inhibitors are usually gaseous at normal temperature and normal pressure, so that the saturated hydrocarbon and the halomethane are preferably mixed in the refrigerant components. On the other hand, a haloethane is normally liquid at normal temperature and normal pressure, so that a gas phase portion of the haloethane that is present as a vapor pressure portion is preferably mixed in the refrigerant components, whereas a liquid phase portion is preferably mixed in the lubricant component.

Also when a saturated hydrocarbon or a halomethane that is liquid at normal temperature and normal pressure is used, a liquid phase portion of the saturated hydrocarbon or the halomethane is preferably mixed in the lubricant component similarly to the case of the haloethane.

As the lubricant component that is a mixture of the working medium for a refrigeration cycle and is used in combination with the working medium for a refrigeration cycle, various known lubricants are suitably used in the refrigeration cycle system. Specific examples of the lubricant include an ester-based lubricant, an ether-based lubricant, a glycol-based lubricant, an alkylbenzene-based lubricant, a fluorine-based lubricant, a mineral oil, and a hydrocarbon-based synthetic oil. The lubricant, however, is not particularly limited to these examples. These lubricants may be used singly or in appropriate combination of two or more lubricants.

Further, various known additives other than the disproportionation inhibitor may be added as a mixture of the working medium for a refrigeration cycle. Specific examples of the additives include an antioxidant, a moisture scavenger, a metal inactivator, an anti-wear agent, and a defoamer. The additives, however, are not limited to these examples.

The antioxidant is used for improving, for example, heat stability, oxidation resistance, and chemical stability of the refrigerant components or the lubricant. The moisture scavenger is for removing moisture penetrated into the refrigeration cycle system and is particularly used for suppressing a change in property of the lubricant. The metal inactivator is used for suppressing or preventing a chemical reaction caused by a catalyst action of a metal component. The anti-wear agent is used for reducing wear at a slide portion in a compressor, particularly wear during operation in a high-pressure state. The defoamer is particularly used for suppressing generation of air bubbles in the lubricant.

Specific types of these additives are not particularly limited, and, for example, a known compound is suitably used according to various conditions of the refrigeration cycle. As these additives, compounds and the like may be used singly or in appropriate combination of two or more compounds and the like. Further, addition amounts of these additives are not also particularly limited, and the additives may be added in normally employed amounts in known ranges as long as a property of the working medium for a refrigeration cycle according to the present disclosure or a working medium-containing mixture containing the working medium is not impaired.

### [Composition of working medium for refrigeration cycle]

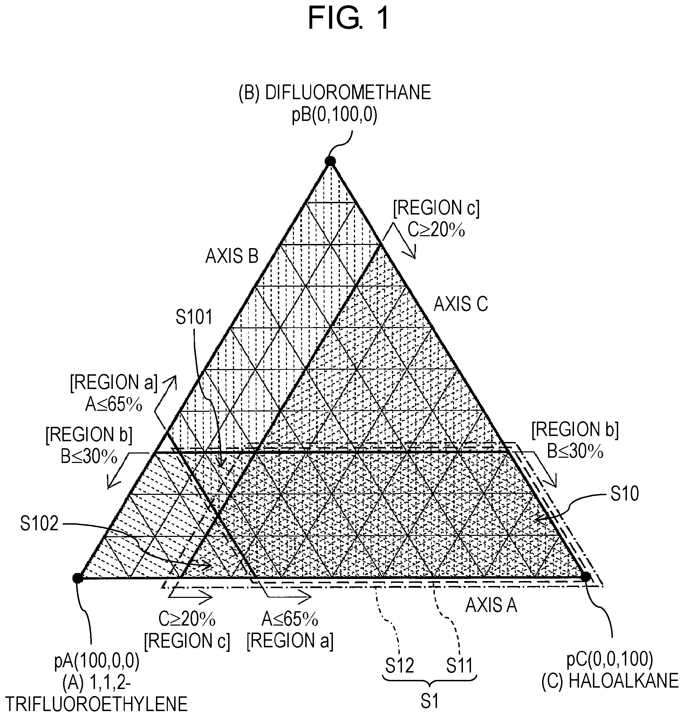

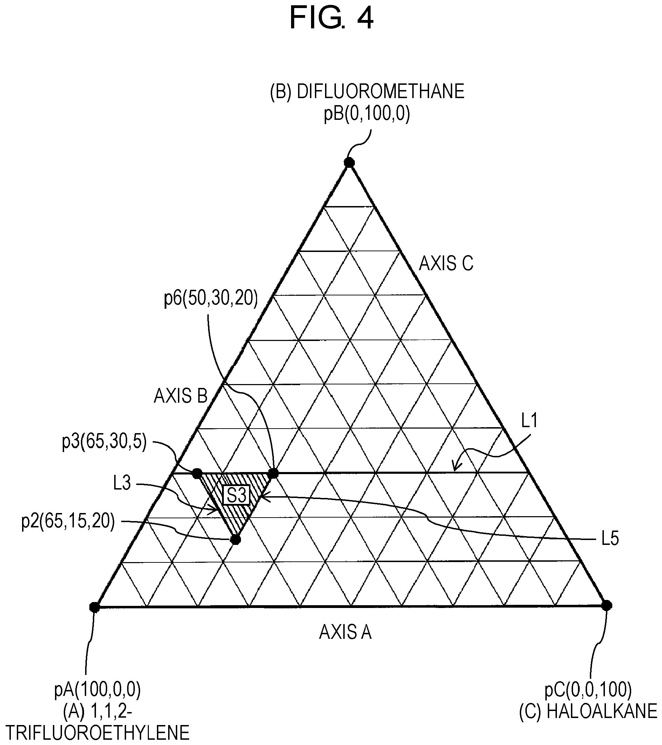

Next, specific composition of the working medium for a refrigeration cycle according to the present disclosure, particularly contents of (A) the 1,1,2-trifluoroethylene and (B) the difluoromethane as the refrigerant components, and (C) the haloalkane as the disproportionation inhibitor are specifically described with reference to FIGS. 1 to 5, whereby the ranges specified in appended claim 1 are illustrated in Fig. 4.

The result of the earnest studies by the inventors of the present invention has made it clear that when a compressor is normally operated, an upper limit of the addition amount (content) of the disproportionation inhibitor is not particularly limited, with a total amount of the refrigerant components and the disproportionation inhibitor (referred to as a "total amount of refrigerant relevant components" for convenience of description) defined as 100 mass%, but the addition amount should be, as one example, less than or equal to 10 mass% of the total amount of the refrigerant relevant components.

A result of further earnest studies by the inventors of the present invention, however, has made it clear that when the compressor causes some kind of error to increase temperature in the compressor, only setting the content of the disproportionation inhibitor at less than or equal to 10 mass% is insufficient.

The compressor generally includes at least a rotational element formed of a rotor and stator, and a compression element for compressing at least the refrigerant components constituting the working medium for a refrigeration cycle. Here, when some kind of error causes the rotor to be locked, not allowing rotation of the rotor, a protection device included in the compressor normally operates to stop supply of current to the rotational element.

In case of no appropriate operation of the protection device, however, the supply of current to the rotational element is continued to cause abnormal heat generation of the rotational element and thus possibly bring an inside of the compressor into a high-temperature state. Accordingly, also when at least (A) the 1,1,2-trifluoroethylene is used as the refrigerant component, it is necessary to simulate such a situation where the inside of the compressor is brought into a high-temperature state. Therefore, even when the inside of the refrigerant compressor is brought into high temperature, it is necessary to excellently suppress the disproportionation reaction of (A) the 1,1,2-trifluoroethylene.

In normal operation of the compressor, an upper limit of the temperature inside the compressor is assumed to be about 120°C to 130°C at highest (for example, see PTL 2). As described above, however, when the compressor causes an error to bring the inside of the compressor into a high-temperatures state, the temperature inside the compressor is at least higher than or equal to 150°C and is possibly increased to higher than or equal to 180°C or to higher than or equal to 200°C depending on a situation.

Thus, the working medium for a refrigeration cycle according to the present disclosure contains an additive in combination to be capable of suppressing the disproportionation reaction of (A) the 1,1,2-trifluoroethylene under higher than or equal to 150°C temperature conditions. In the present disclosure, used as the additive is (C) the haloalkane (having 1 to 4 carbon atoms but excluding a case where one or more halogen atoms are all fluorine) that is suitable as the disproportionation inhibitor, and a suitable composition range of the components (A) to (C) is limited.

FIGS. 1 to 4 are each a ternary phase diagram (three component composition diagram) representing, by triangular coordinates (A, B, C), the composition of the three components: (A) the 1,1,2-trifluoroethylene; (B) the difluoromethane; and (C) the haloalkane that are essential components of the working medium for a refrigeration cycle according to the present disclosure, whereby the ranges specified in appended claim 1 are illustrated in Fig. 4. For convenience of description, a mixture of the three components formed of the components (A) to (C) is referred to as a "three component mixture." This three component mixture is substantially the same as the working medium for a refrigeration cycle. The working medium for a refrigeration cycle, however, may also contain another component other than the components (A) to (C) as described above, so that the three component mixture is also referred to as a "basic component" of the working medium for a refrigeration cycle.

In the equilateral-triangular triangular coordinates illustrated in FIGS. 1 to 5, sides of an equilateral triangle are axes corresponding to the amounts of the components (A) to (C) in the working medium for a refrigeration cycle, and a unit of the amounts is mass%. In the triangular coordinates illustrated in FIGS. 1 to 5, a base axis (axis A) represents the mass% of (A) the 1,1,2-trifluoroethylene, a left-side equilateral axis (axis B) represents the mass% of (B) the difluoromethane, and a right-side equilateral axis (axis C) represents the mass% of (C) the haloalkane.

In the triangular coordinates illustrated in FIGS. 1 to 5, nearness to a point pA positioned at a left-lower base angle means that (A) the 1,1,2-trifluoroethylene in the three component mixture is large in mass. The point pA represents composition including 100 mass% of the component (A) and 0 mass% of the components (B) and (C) ((A, B, C) = (100, 0, 0)).

Similarly, nearness to a point pB positioned at an upper apex angle means that (B) the difluoromethane in the three component mixture is large in mass. The point pB represents composition including 100 mass% of the component (B) and 0 mass% of the components (A) and (C) ((A, B, C) = (0, 100, 0)).

Similarly, nearness to a point pC positioned at a right-lower base angle means that (C) the haloalkane in the three component mixture is large in mass. The point pC represents composition including 100 mass% of the component (C) and 0 mass% of the components (A) and (B).

Therefore, in the triangular coordinates illustrated in FIGS. 1 to 5, the axis A represents 0 mass% of the content of (B) the difluoromethane in the three component mixture. The axis B represents 0 mass% of the content of (C) the haloalkane in the three component mixture. Further, the axis C represents 0 mass% of the content of (A) the 1,1,2-trifluoroethylene in the three component mixture.

As regards the working medium for a refrigeration cycle according to the present disclosure, some conditions to be satisfied by the working medium for a refrigeration cycle are conceivable. Among the conceivable conditions, a first important condition is being capable of suppressing the disproportionation reaction of (A) the 1,1,2-trifluoroethylene and to have a global warming potential (GWP) of less than or equal to 200 (GWP ≤ 200) (first condition).

The working medium for a refrigeration cycle according to the present disclosure contains, as the refrigerant components, (A) the 1,1,2-trifluoroethylene and (B) the difluoromethane in combination to further reduce at least the GWP, and is capable of satisfying the condition.

The composition of the three component mixture that satisfies the first condition is composition corresponding to a region S1 that is a combined region formed of two regions (a region S11 and a region S12) in the ternary phase diagram illustrated in FIG. 1. Specifically, this region S1 is described as follows.

First, in the ternary phase diagram illustrated in FIG. 1, a "region a" is defined as a region representing more than 0 mass% and less than or equal to 65 mass% of (A) the 1,1,2-trifluoroethylene. A "region b" is defined as a region representing more than 0 mass% and less than or equal to 30 mass% of (B) the difluoromethane. A "region C" is defined as a region representing more than or equal to 20 mass% and less than 100 mass% of (C) the haloalkane.

In FIG. 1, the region a is indicated as a region including vertical dotted lines and indicates, with a sign "A ≤ 65%" and an arrow, that (A) the 1,1,2-trifluoroethylene is less than or equal to 65 mass%. Similarly, the region b is indicated as a region including diagonally right-down dotted lines and indicates, with a sign "B ≤ 30%" and an arrow, that (B) the difluoromethane is less than or equal to 30 mass%. The region c is indicated as a region including diagonally right-up dotted lines and indicates, with a sign "C ≥ 20%" and an arrow, that (C) the haloalkane is more than or equal to 20 mass%.

In FIG. 1, an overlapping region where the regions a and b described above overlap one another is indicated as a region S11 surrounded by a dash-line frame ("first overlapping region S11"). Similarly, an overlapping region where the regions b and c described above overlap one another is indicated as a region S12 surrounded by a dash-dotted-line frame ("second overlapping region S12"). The region S1 is, as indicated in FIG. 1, a combined region formed of these first overlapping region S11 and second overlapping region S12.

Here, the region S1 also includes, as indicated in FIG. 1, a region S10 that is a region where the first overlapping region S11 and the second overlapping region S12 overlap one another. Therefore, the region S1 is not simply a total region of the first overlapping region S11 and the second overlapping region S12, so that the present disclosure expresses the region S1 as a "combined region" formed by "combining" the first overlapping region S11 and the second overlapping region S12. The region S10 where the first overlapping region S11 and the second overlapping region S12 overlap one another corresponds to an overlapping region where all the regions a, b, and c described above overlap one another, so that the region S10 is defined as an "all overlapping region S10" for convenience.

An overlapping region, where the regions a and b overlap one another but not the region c, in the first overlapping region S11, that is, a region in the first overlapping region S11 that does not corresponding to the all overlapping region S10 is referred to as a "partial first overlapping region S101" for convenience. Similarly, an overlapping region, where the regions b and c overlap one another but not the region a, in the second overlapping region S12, that is, a region in the second overlapping region S12 that does not corresponding to the all overlapping region S10 is referred to as a "partial second overlapping region S102" for convenience. Therefore, it is possible to describe the region S1 as corresponding to a region formed of the all overlapping region S10, the partial first overlapping region S101, and the partial second overlapping region S102.

The all overlapping region S10, the partial first overlapping region S101, and the partial second overlapping region S102 do not have a region where the overlapping regions overlap one another. Therefore, the region S1 is, unlike when described by the first overlapping region S11 and the second overlapping region S12, expressed as a "total region" formed by simply "totalizing" the all overlapping region S10, the partial first overlapping region S101, and the partial second overlapping region S102.

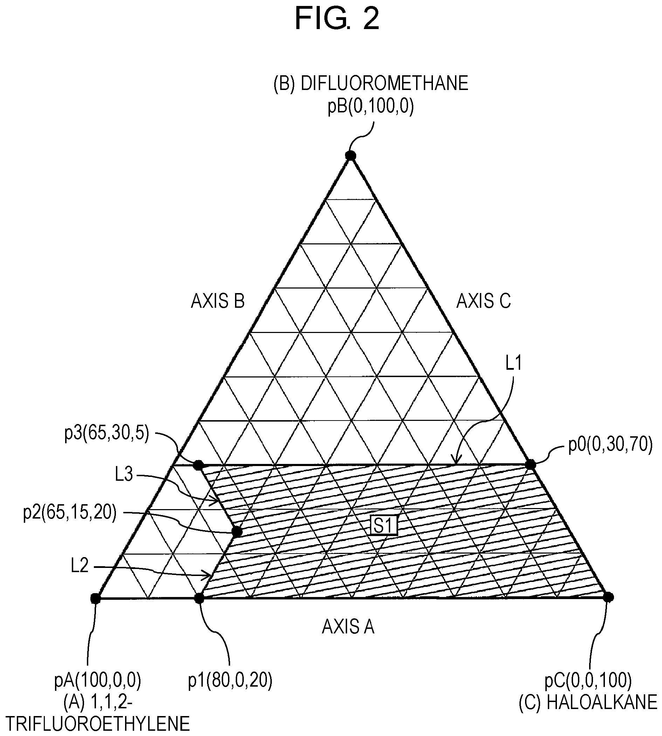

It is possible to describe the region S1 as a region surrounded by a plurality of lines in a ternary phase diagram illustrated in FIG. 2.

Specifically, the region S1 is a region surrounded by lines L1, L2, and L3 and axes A and C. The line L1 is a line representing 30 mass% of (B) the difluoromethane. The line L2 is a line connecting between a point p1 (A, B, C) = (80, 0, 20) and a point p2 (A, B, C) = (65, 15, 20). The line L3 is a line connecting between the point p2 and a point p3 (A, B, C) = (65, 30, 5) on the line L1.

The three component mixture in the present disclosure contains all the components (A) to (C). Therefore, (B) the difluoromethane is more than 0 mass%, (A) the 1,1,2-trifluoroethylene is more than 0 mass%, and (C) the haloalkane is less than 100 mass%.

Here, in the region S1 indicated in FIG. 2, a point on the axes A and C represents the mixture containing only two components, and an intersection point pC between the axes A and C represents the mixture containing only one component, (C) the haloalkane. Therefore, the point on the axes A and C is excluded from the region S1.

It is also possible to describe the region S1 by points on the ternary phase diagram illustrated in FIG. 2. That is, when an intersection between the line L1 and the axis C is defined as a point p0 (A, B, C) = (0, 30, 70), it is possible to define the region S1 as a region formed by connecting the points p1, p2, p3, p0, and pC with a line (as described above, however, the point on the axes A and C is excluded).

In a composition range of the components (A) to (C), a composition range in FIG. 1 that represents more than 30 mass% of the content of (B) the difluoromethane, that is, a region above the line L1 in FIG. 2 expresses an excessively large content of (B) the difluoromethane, so that the condition GWP ≤ 200 is not satisfied.

A composition range in FIG. 1 that represents more than 65 mass% of the content of (A) the 1,1,2-trifluoroethylene and less than 20 mass% of the content of (C) the haloalkane, that is, a region on a left side of the lines L2 and L3 in FIG. 2 expresses an excessively large content of (A) the 1,1,2-trifluoroethylene or an excessively small content of (C) the haloalkane, so that the working medium for a refrigeration cycle is incapable of attaining excellent refrigerant performance.

Next, in the working medium for a refrigeration cycle according to the present disclosure, a second important condition is, in addition to the first condition described above, suitably setting a content ratio between (A) the 1,1,2-trifluoroethylene and (B) the difluoromethane that are the refrigerant components used in combination, to allow the working medium for a refrigeration cycle to attain more excellent refrigerant performance (second condition).

As regards this condition, the result of the earnest studies by the inventors of the present invention has clarified that with the total amount of the refrigerant relevant components (the total amount of the refrigerant components and the disproportionation inhibitor) defined as 100 mass%, the content of (A) the 1,1,2-trifluoroethylene is preferably more than or equal to 40 mass% depending on various conditions. That is, when the content of the component (A) is more than or equal to 40 mass% of the total amount of the refrigerant relevant components, the working medium not only has a GWP of less than or equal to 200 (satisfies the first condition) but is also expected to further lower the GWP depending on various conditions.

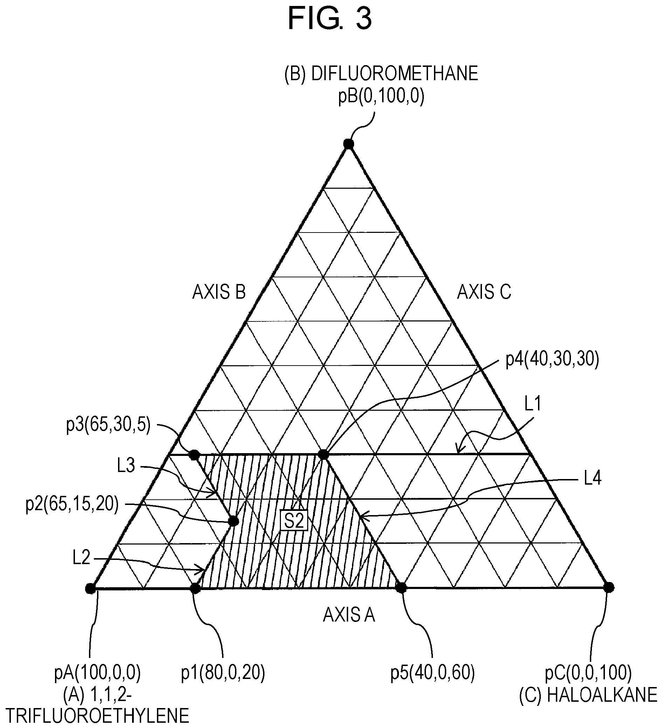

The composition of the three component mixture capable of satisfying the second condition is composition corresponding to a region S2 including diagonal lines in the ternary phase diagram illustrated in FIG. 3.

Specifically, this region S2 is a region surrounded by the axis A and the lines L1, L2, L3 and L4. The line L4 is a line connecting between a point p4 (A, B, C) = (40, 30, 30) on the line L1 and a point p5 (A, B, C) = (40, 0, 60). The line L4 is a line representing 40 mass% of (A) the 1,1,2-trifluoroethylene.

It is also possible to describe the region S2, similarly to the region S1 described above, by points on the ternary phase diagram illustrated in FIG. 3. That is, it is possible to define the region S2 as a region formed by connecting the points p1, p2, p3, p4, and p5 with a line.

Next, in the working medium for a refrigeration cycle according to the present disclosure, a third important condition is reducing the content of (C) the haloalkane as the disproportionation inhibitor to as less as possible to make the working medium for a refrigeration cycle have more excellent refrigerant performance (third condition).

With the total amount of the refrigerant relevant components (the total amount of the refrigerant components and the disproportionation inhibitor) defined as 100 mass%, the working medium for a refrigeration cycle having an excessively large content of the disproportionation inhibitor is possibly incapable of attaining excellent refrigerant performance depending on various conditions. Therefore, the content of (C) the haloalkane as the disproportionation inhibitor is preferably set at less than or equal to 20 mass% in the three component mixture.

The composition of the three component mixture capable of satisfying the third condition and included in the working medium of the present invention is composition corresponding to a region S3 including diagonal lines in the ternary phase diagram illustrated in FIG. 4.

Specifically, this region S3 is a region surrounded by the lines L1, L3, and L5. The line L5 is a line connecting between a point p6 (A, B, C) = (50, 30, 20) on the line L1 and the point p2 described above. The line L5 is a line representing 20 mass% of (C) the haloalkane.

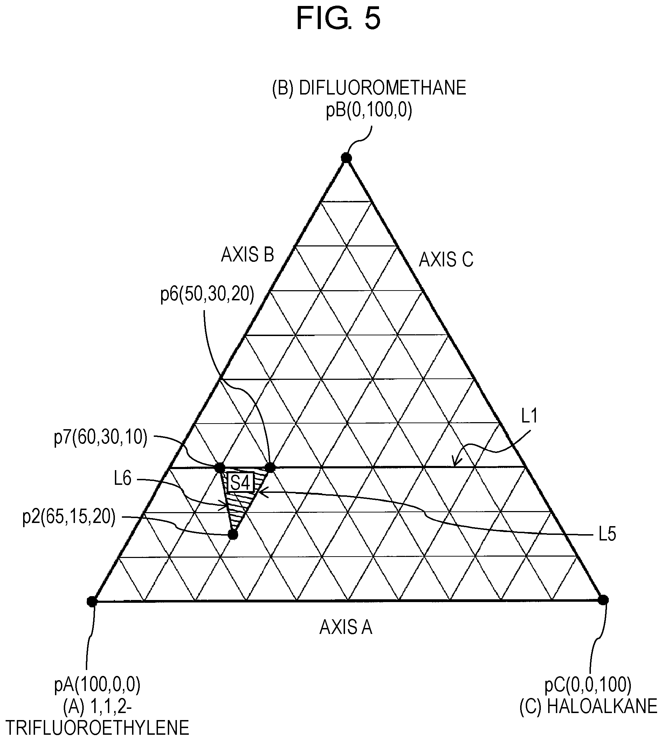

More preferable composition of the three component mixture capable of satisfying the third condition may be composition corresponding to a region S4 including diagonal lines in the ternary phase diagram illustrated in FIG. 5.

Specifically, this region S4 is a region surrounded by the lines L1, L5, and L6. The line L6 is a line connecting between a point p7 (A, B, C) = (60, 30, 10) on the line L1 and the point p2.

It is also possible to describe these regions S3 and S4, similarly to the region S1 or S2 described above, by points on the ternary phase diagrams illustrated in FIGS. 4 and 5, respectively.

That is, it is possible to define the region S3 as a region formed by connecting the points p2, p3, and p6 with a line. It is possible to define the region S4 as a region formed by connecting the points p2, p6, and p7 with a line.

The regions S3 and S4 mostly overlap one another, but the region S4 represents, except the point p2, less than 65 mass% of the content of (A) the 1,1,2-trifluoroethylene to attain further more excellent refrigerant performance.

Thus, in the working medium for a refrigeration cycle according to the present disclosure, when (A) the 1,1,2-trifluoroethylene and (B) the difluoromethane are used in combination as the refrigerant components, (C) the haloalkane having 1 to 4 carbon atoms but excluding a case where one or more halogen atoms are all fluorine is used as the disproportionation inhibitor within the composition ranges corresponding to the specific regions in the ternary phase diagram described above.

This configuration enables the working medium to effectively suppress or reduce the disproportionation reaction of (A) the 1,1,2-trifluoroethylene not only in a temperature range under normal use conditions but also in a higher temperature range, under higher than or equal to 150°C temperature conditions.

### [Configuration example of refrigeration cycle system]

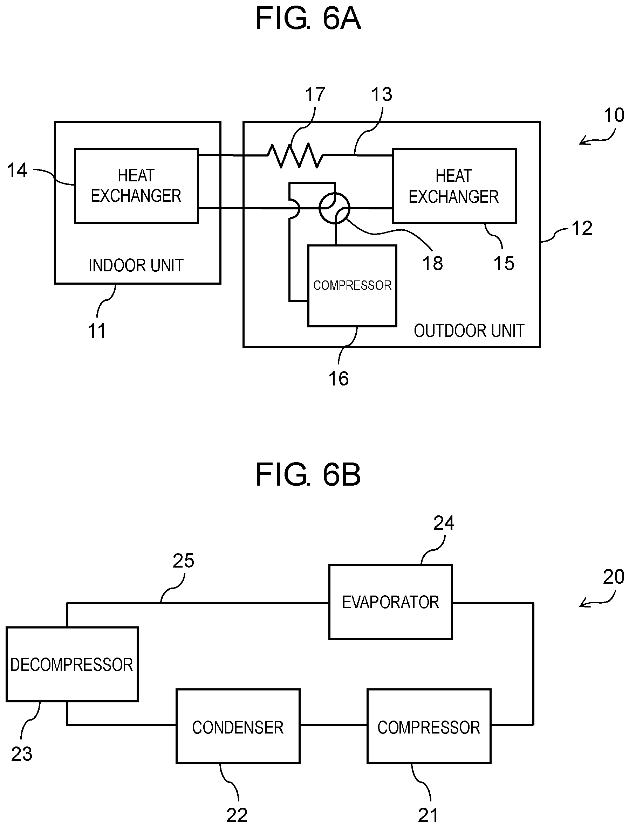

Next, one example of a refrigeration cycle system configured to include the working medium for a refrigeration cycle according to the present disclosure is described with reference to FIGS. 6A and 6B.

A specific configuration of the refrigeration cycle system according to the present disclosure is not particularly limited, and the refrigeration cycle system only needs to be configured to include constituent elements such as a compressor, a condenser, an expander, and an evaporator connected to each other with a pipe. A specific application example of the refrigeration cycle system according to the present disclosure is not also particularly limited. Examples of the application include an air conditioning device (air conditioner), a refrigerator (for home use and professional use), a dehumidifier, a showcase, an ice maker, a heat pump water heater, a heat pump washing machine and dryer combo, and a vending machine.

An air conditioning device is described as a typical application example of the refrigeration cycle system according to the present disclosure.

Specifically, as schematically illustrated in a block configuration diagram of FIG. 6A, air conditioning device 10 according to the present exemplary embodiment includes indoor unit 11 and outdoor unit 12 together with pipe 13 for connecting these units.

Indoor unit 11 includes heat exchanger 14. Outdoor unit 12 includes heat exchanger 15, compressor 16, and decompressor 17.

Heat exchanger 14 of indoor unit 11 is circularly connected to heat exchanger 15 of outdoor unit 12 with pipe 13 to thus form a refrigeration cycle. Specifically, heat exchanger 14 of indoor unit 11, compressor 16, heat exchanger 15 of outdoor unit 12, and decompressor 17 are circularly connected to each other in this order with pipe 13.

Pipe 13 that connects heat exchanger 14, compressor 16, and heat exchanger 15 is provided with four-way valve 18 for switching between cooling and heating. Further, indoor unit 11 includes, for example, a blast fan, a temperature sensor, and an operation portion that are not shown in the drawing, and outdoor unit 12 includes, for example, an air blower and an accumulator that are not shown in the drawing. Further, pipe 13 is provided with, for example, various valve devices that are other than four-way valve 18 described above and are not shown in the drawing, and a strainer.

In heat exchanger 14 of indoor unit 11, heat exchange is performed between indoor air sucked into indoor unit 11 by the blast fan and a refrigerant flowing through in heat exchanger 14. Indoor unit 11 blows air warmed through the heat exchange into a room during heating and blows air cooled through the heat exchange into a room during cooling. In heat exchanger 15 of outdoor unit 12, heat exchange is performed between external air sucked into outdoor unit 12 by the air blower and a refrigerant flowing through in heat exchanger 15.

Specific configurations are not particularly limited for, for example, indoor unit 11 and outdoor unit 12 as well as for heat exchanger 14 or 15, compressor 16, decompressor 17, four-way valve 18, the blast fan, the temperature sensor, the operation portion, the air blower, the accumulator, other valve devices, and the strainer, and it is possible to use known configurations.

One example of operation of air conditioning device 10 illustrated in FIG. 6A is specifically described.

First, in cooling operation or dehumidifying operation, compressor 16 of outdoor unit 12 compresses a gas refrigerant and discharges the compressed gas refrigerant, which is sent out to heat exchanger 15 of outdoor unit 12 through four-way valve 18. In heat exchanger 15, heat exchange is performed between external air and the gas refrigerant, and the gas refrigerant is condensed and liquefied. The liquefied liquid refrigerant is decompressed by a decompressor 17 and sent out to heat exchanger 14 of indoor unit 11. In heat exchanger 14, the liquid refrigerant is evaporated through heat exchange with indoor air to become a gas refrigerant. The gas refrigerant is returned to compressor 16 of outdoor unit 12 through four-way valve 18. Compressor 16 compresses the gas refrigerant, and the refrigerant discharged from compressor 16 is sent out to heat exchanger 15 again through four-way valve 18.

On the other hand, in heating operation, compressor 16 of outdoor unit 12 compresses a gas refrigerant and discharges the compressed gas refrigerant, which is sent out to heat exchanger 14 of indoor unit 11 through four-way valve 18. In heat exchanger 14, the gas refrigerant is condensed and liquefied through heat exchange with indoor air. The liquefied liquid refrigerant is decompressed by decompressor 17 to become a gas-liquid two-phase refrigerant and sent out to heat exchanger 15 of outdoor unit 12. In heat exchanger 15, heat exchange is performed between external air and the gas-liquid two-phase refrigerant, and the gas-liquid two-phase refrigerant is evaporated to become a gas refrigerant and returned to compressor 16. Compressor 16 compresses the gas refrigerant, and the refrigerant discharged from compressor 16 is sent out to heat exchanger 14 of indoor unit 11 again through four-way valve 18.

Further, a refrigerator is described as another typical application example of the refrigeration cycle system according to the present disclosure.

Specifically, as schematically illustrated in a block diagram of FIG. 6B, for example, refrigerator 20 according to the present exemplary embodiment includes, for example, compressor 21, condenser 22, decompressor 23, evaporator 24, and pipe 25 illustrated in FIG. 6B. Further, refrigerator 20 also includes, for example, a housing as a main body, an air blower, an operation portion, and a controller that are not shown in the drawing.

Compressor 21, condenser 22, decompressor 23, and evaporator 24 are circularly connected to each other in this order with pipe 25 for flowing a refrigerant gas, and this configuration forms a refrigeration cycle.

Configurations are not particularly limited for, for example, compressor 21, condenser 22, decompressor 23, evaporator 24, pipe 25, the main body housing, the air blower, the operation portion, and the controller, and it is possible to suitably use known configurations. Refrigerator 20 may have a known configuration other than these configurations.

One example of operation of refrigerator 20 illustrated in FIG. 6B is specifically described.

Compressor 21 compresses a gas refrigerant and discharges the compressed gas refrigerant to condenser 22. Condenser 22 cools the gas refrigerant to give a liquid refrigerant. The liquid refrigerant is decompressed by passing through decompressor 23 formed of, for example, a capillary tube and sent to evaporator 24. In evaporator 24, the liquid refrigerant draws heat from a periphery and is gasified to be a gas refrigerant. Thereafter, the refrigerant that has become the gas refrigerant is returned to compressor 21. Compressor 21 compresses the gas refrigerant and discharges the compressed gas refrigerant to condenser 22 again.

These air conditioning device 10 and refrigerator 20 are refrigeration cycle systems configured to include the working medium for a refrigeration cycle described above. The working medium for a refrigeration cycle contains (A) 1,1,2-trifluoroethylene as a main component of refrigerant components, and (B) difluoromethane as an accessory component. (A) The 1,1,2-trifluoroethylene has an excellent property as the refrigerant component and has a small ODP and GWP. Use of (B) the difluoromethane in combination with (A) the 1,1,2-trifluoroethylene enables the working medium for a refrigeration cycle to attain excellent refrigerant performance. These effects result in reducing influence of the working medium for a refrigeration cycle on environment and attaining an efficient refrigeration cycle system.

Further, the working medium for a refrigeration cycle according to the present disclosure contains, as a disproportionation inhibitor, (C) a haloalkane having 1 to 4 carbon atoms but excluding a case where one or more halogen atoms are all fluorine, within the composition ranges described above. This component within the composition ranges is, as the disproportionation inhibitor, capable of effectively suppressing or reducing the disproportionation reaction of (A) the 1,1,2-trifluoroethylene even when the compressor causes some kind of error to increase temperature in the compressor. This results in effectively avoiding, for example, generation of soot caused by a chain disproportionation reaction. Thus, it is possible to improve reliability of the working medium for a refrigeration cycle and the refrigeration cycle system including the working medium.

### EXAMPLES

Hereinafter, the present disclosure is more specifically described based on examples, comparative examples, and a reference example. The present disclosure, however, is not limited to these examples. A person skilled in the art can perform various changes, corrections, and modifications without departing from the scope of the present disclosure.

### (Experimental system for disproportionation reaction)

Used for an experiment was a sealing-type pressure resistant vessel (stainless steel sealing vessel TVS-N2 [trade name] manufactured by TAIATSU TECHNO CORPORATION, inner volume 50 mL). The heat resistant vessel was equipped with a pressure sensor (VESVM10-2m [trade name] manufactured by VALCOM Co., LTD.) for measuring internal pressure of the pressure resistant vessel, a thermocouple (PL thermocouple gland PL-18-K-A 4-T [trade name] manufactured by Conax Technologies) for measuring internal temperature in the pressure resistant vessel, and a discharger (UH-1 series mini welder [trade name] manufactured by AS ONE Corporation) for generating electric discharge in the pressure resistant vessel.

Further, to the sealing vessel were connected a gas cylinder of the main component of the refrigerant components, (A) 1,1,2-trifluoroethylene (manufactured by SynQuest Laboratories and sold by HYDRUS CHEMICAL INC., containing 5% of limonene (liquid phase) as a stabilizer) and a gas cylinder of the accessory component of the refrigerant components, (B) difluoromethane (manufactured by DAIKIN INDUSTRIES, LTD.) in a pressure adjustable manner.

Then, two mantle heaters (pipe mantle heater P-31 type and p-51 type [both trade names] manufactured by Tokyo Garasu Kikai Co., Ltd.) were placed to heat the entire pressure resistant vessel. Further, a ribbon heater (flexible ribbon heater manufactured by Tokyo Technological Labo co., Ltd., 1 m, 200 W) was placed to also enable heating of a pipe portion.

The pressure sensor and the thermometer attached to the heat resistant vessel are connected to a data logger (GL220 type [trade name] manufactured by GRAPHTEC Corporation, sampling minimum interval 10 milliseconds). Thus, an experimental system for a disproportionation reaction was structured.

### (Comparative Example 1)

In the experimental system, (A) the 1,1,2-trifluoroethylene and (B) the difluoromethane were introduced from the gas cylinders into the pressure resistant vessel, and the introduction amounts were adjusted such that the content of (B) the difluoromethane was 22 mass%.

In the present comparative example, the composition of the components (A) to (C) in the pressure resistant vessel is represented by triangular coordinates as (A, B, C) = (78, 22, 0).

In order to induce the disproportionation reaction of (A) the 1,1,2-trifluoroethylene, electric discharge was generated by the discharger in the heat resistant vessel having an internal temperature of about 200°C. Then, the internal pressure and the internal temperature were measured by the data logger at the time of the generation of electric discharge.

As a result of the measurement, a rise in the internal pressure and the internal temperature was confirmed after elapse of several seconds since the one-time generation of electric discharge. Thereafter, after the internal pressure and the internal temperature were sufficiently lowered, the inside of the pressure resistant vessel was checked, and generation of a considerable amount of soot was confirmed.

### (Comparative Example 2)

In the experimental system, confirmation about the generation of the disproportionation reaction of (A) the 1,1,2-trifluoroethylene was performed similarly to Comparative Example 1 except that only the 1,1,2-trifluoroethylene (A) was introduced from the gas cylinder into the pressure resistant vessel.

In present Comparative Example 2, the composition of the components (A) to (C) in the pressure resistant vessel is represented by triangular coordinates as (A, B, C) = (100, 0, 0).

As a result of the measurement, a rise in the internal pressure and the internal temperature was confirmed after elapse of several seconds since the one-time generation of electric discharge. Further, similarly to the case of Comparative Example 1, the inside of the pressure resistant vessel was checked, and generation of a considerable amount of soot was confirmed.

### (Reference Example)

In the experimental system, only (A) the 1,1,2-trifluoroethylene was introduced from the gas cylinder into the pressure resistant vessel, and (C) the haloalkane, or 1,1,1-trifluoro-2-iodoethane (CF₃CH₂I) was added as the disproportionation inhibitor in an addition amount of 25 mass%.

In the present reference example, the composition of the components (A) to (C) in the pressure resistant vessel is represented by triangular coordinates as (A, B, C) = (75, 0, 25).

Then, similarly to Comparative Example 1, confirmation about the generation of the disproportionation reaction of (A) the 1,1,2-trifluoroethylene was performed.

As a result, no significant rise in the pressure and the temperature was shown even when the electric discharge was repeated 40 or more times. Thereafter, after the internal pressure and the internal temperature were sufficiently lowered, the inside of the pressure resistant vessel was checked, and no generation of soot was observed.

The mixture used in the present reference example, however, was not one capable of giving sufficient refrigerant performance as the working medium for a refrigeration cycle.

### (Comparative Example 1')

In the experimental system, (A) the 1,1,2-trifluoroethylene and (B) the difluoromethane were introduced from the gas cylinders into the pressure resistant vessel, and the introduction amounts were adjusted such that the content of (B) the difluoromethane was 4.5 mass%. Further, (C) the haloalkane, or 1,1,1-trifluoro-2-iodoethane (CF₃CH₂I) was added as the disproportionation inhibitor in an addition amount of 25 mass%.

In the present comparative example, the composition of the components (A) to (C) in the pressure resistant vessel is represented by triangular coordinates as (A, B, C) = (70.5, 4.5, 25) and is within the composition range of the region S1 or S2 (see FIG. 1, 2, or 3).

Then, similarly to Comparative Example 1, confirmation about the generation of the disproportionation reaction of (A) the 1,1,2-trifluoroethylene was performed. As a result, no significant rise in the pressure and the temperature were shown even when the electric discharge was repeated 4 times.

### (Comparative Example 2')

Confirmation about the generation of the disproportionation reaction of (A) the 1,1,2-trifluoroethylene was performed similarly to Example 1 described above except that the introduction amounts were adjusted such that the content of (B) the difluoromethane was 9 mass%.

In the present comparative example, the composition of the components (A) to (C) in the pressure resistant vessel is represented by triangular coordinates as (A, B, C) = (66, 9, 25) and is within the composition range of the region S1 or S2 (see FIG. 1, 2, or 3).

In the present example, no significant rise in the pressure and the temperature was shown even when the electric discharge was repeated 20 times.

### (Comparative Example 3')

Confirmation about the generation of the disproportionation reaction of (A) the 1,1,2-trifluoroethylene was performed similarly to Example 1 described above except that the introduction amounts were adjusted such that the content of (B) the difluoromethane was 15 mass%.

In the present comparative example, the composition of the components (A) to (C) in the pressure resistant vessel is represented by triangular coordinates as (A, B, C) = (60, 15, 25) and is within the composition range of the region S1 or S2 (see FIG. 1, 2, or 3).

In the present comparative example, no significant rise in the pressure and the temperature was shown even when the electric discharge was repeated 40 or more times. Thereafter, after the internal pressure and the internal temperature were sufficiently lowered, the inside of the pressure resistant vessel was checked, and no generation of soot was observed.

### (Comparative Example 4')

Confirmation about the generation of the disproportionation reaction of (A) the 1,1,2-trifluoroethylene was performed similarly to Example 1 described above except that the introduction amounts were adjusted such that the content of (B) the difluoromethane was 22 mass%.

In the present comparative example, the composition of the components (A) to (C) in the pressure resistant vessel is represented by triangular coordinates as (A, B, C) = (53, 22, 25) and is within the composition range of the region S1 or S2 (see FIG. 1, 2, or 3).

In the present comparative example, no significant rise in the pressure and the temperature was shown even when the electric discharge was repeated 40 or more times. Thereafter, after the internal pressure and the internal temperature were sufficiently lowered, the inside of the pressure resistant vessel was checked, and no generation of soot was observed.

### (Comparative Example 3)

Confirmation about the generation of the disproportionation reaction of (A) the 1,1,2-trifluoroethylene was performed similarly to Comparative Example 1 described above except that the introduction amounts were adjusted such that the content of (B) the difluoromethane was 9 mass% and (C) the haloalkane, or 1,1,1-trifluoro-2-iodoethane was added in an addition amount of 14.3 mass%.

In the present comparative example, the composition of the components (A) to (C) in the pressure resistant vessel is represented by triangular coordinates as (A, B, C) = (76.7, 9, 14.3) and is out of the composition range of the region S1 (see FIG. 1 or 2).

A rise in the internal pressure and the internal temperature was confirmed after elapse of several seconds since the one-time generation of electric discharge. Further, similarly to the case of Comparative Example 1, the inside of the pressure resistant vessel was checked, and generation of a considerable amount of soot was confirmed.

### (Comparative Example 4)

Confirmation about the generation of the disproportionation reaction of (A) the 1,1,2-trifluoroethylene was performed similarly to Example 1 described above except that the introduction amounts were adjusted such that the content of (B) the difluoromethane was 15 mass% and (C) the haloalkane, or 1,1,1-trifluoro-2-iodoethane was added in an addition amount of 14.3 mass%.

In present Comparative Example 4, the composition of the components (A) to (C) in the pressure resistant vessel is represented by triangular coordinates as (A, B, C) = (70.7, 15, 14.3) and is out of the composition range of the region S1 (see FIG. 1 or 2).

In present Comparative Example 4, no significant rise in the pressure and the temperature was shown even when the electric discharge was repeated 40 or more times. Thereafter, after the internal pressure and the internal temperature were sufficiently lowered, the inside of the pressure resistant vessel was checked, and no generation of soot was observed.

The three component mixture used in present Comparative Example 4, however, was not one capable of giving sufficient refrigerant performance as the working medium for a refrigeration cycle.

### (Comparative Example 5')

Confirmation about the generation of the disproportionation reaction of (A) the 1,1,2-trifluoroethylene was performed similarly to Example 1 described above except that the introduction amounts were adjusted such that the content of (B) the difluoromethane was 4.5 mass% and (C) the haloalkane, or monoiodoethane (CH₃CH₂I) was added as the disproportionation inhibitor in an addition amount of 25 mass%.

In the present comparative example, the composition of the components (A) to (C) in the pressure resistant vessel is represented by triangular coordinates as (A, B, C) = (70.5, 4.5, 25) and is within the composition range of the region S1 or S2 (see FIG. 1, 2, or 3).

In the present comparative example, no significant rise in the pressure and the temperature was shown even when the electric discharge was repeated 3 times.

### (Comparative Example 6')

Confirmation about the generation of the disproportionation reaction of (A) the 1,1,2-trifluoroethylene was performed similarly to Comparative Example 5 described above except that the introduction amounts were adjusted such that the content of (B) the difluoromethane was 9 mass%.

In the present comparative example, the composition of the components (A) to (C) in the pressure resistant vessel is represented by triangular coordinates as (A, B, C) = (66, 9, 25) and is within the composition range of the region S1 or S2 (see FIG. 1, 2, or 3).

In the present comparative example, no significant rise in the pressure and the temperature was shown even when the electric discharge was repeated 8 times.

### (Comparative Example 7')

Confirmation about the generation of the disproportionation reaction of (A) the 1,1,2-trifluoroethylene was performed similarly to Example 5 described above except that the introduction amounts were adjusted such that the content of (B) the difluoromethane was 15 mass%.

In the present comparative example, the composition of the components (A) to (C) in the pressure resistant vessel is represented by triangular coordinates as (A, B, C) = (60, 15, 25) and is within the composition range of the region S1 or S2 (see FIG. 1, 2, or 3).

In the present comparative exemplary embodiment, no significant rise in the pressure and the temperature was shown even when the electric discharge was repeated 11 times.

### (Comparative Example 8')

Confirmation bout the generation of the disproportionation reaction of (A) the 1,1,2-trifluoroethylene was performed similarly to Example 5 described above except that the introduction amounts were adjusted such that the content of (B) the difluoromethane was 22 mass%.

In the present comparative example, the composition of the components (A) to (C) in the pressure resistant vessel is represented by triangular coordinates as (A, B, C) = (53, 22, 25) and is within the composition range of the region S1 or S2 (see FIG. 1, 2, or 3).

In the present comparative example, no significant rise in the pressure and the temperature was shown even when the electric discharge was repeated 40 or more times. Thereafter, after the internal pressure and the internal temperature were sufficiently lowered, the inside of the pressure resistant vessel was checked, and no generation of soot was observed.

### (Comparative Example 5)

Confirmation about the generation of the disproportionation reaction of (A) the 1,1,2-trifluoroethylene was performed similarly to Example 5 described above except that the introduction amounts were adjusted such that the content of (B) the difluoromethane was 9 mass% and (C) the haloalkane, or monoiodoethane was added in an addition amount of 14.3 mass%.

In the present comparative example, the composition of the components (A) to (C) in the pressure resistant vessel is represented by triangular coordinates as (A, B, C) = (76.7, 9, 14.3) and is out of the composition range of the region S1 (see FIG. 1 or 2).

In the present comparative example, a rise in the internal pressure and the internal temperature was confirmed after elapse of several seconds since the one-time generation of electric discharge. Further, the inside of the pressure resistant vessel was checked, and generation of a considerable amount of soot was confirmed.

### (Comparison among comparative examples, and reference example)

The results of Comparative Examples 1 and 2 clarify that the generation of electric discharge in the pressure resistant vessel of the experimental system causes, also under higher temperature conditions (about 200°C) than usual, the disproportionation reaction of the 1,1,2-trifluoroethylene, which is made into a chain reaction for rapid progression of the disproportionation reaction.

This disproportionation reaction is clarified to be similarly generated both when only (A) the 1,1,2-trifluoroethylene is used as the refrigerant component and when (A) the 1,1,2-trifluoroethylene and (B) the difluoroethane are used in combination as the refrigerant components.

In contrast, the results of the reference example and Comparative Examples 1' to 8' clarify that it is possible to effectively suppress the disproportionation reaction even under higher temperature conditions (about 200°C) than usual when (A) the 1,1,2-trifluoroethylene and (B) the difluoroethane are used in combination, (C) the haloalkane is used as the disproportionation inhibitor, and further the composition of the components (A) to (C) is within the composition ranges described above.

In the comparative examples, and the reference example, the larger the number of times of electric discharge performed without accompanying a significant rise in the temperature and the pressure in the pressure resistant vessel and the generation of soot, the more effectively the disproportionation reaction is suppressed.

The results of Comparative Examples 3 to 5 clarify that when the composition of the components (A) to (C) is out of the composition ranges described above, the disproportionation reaction is not suppressed, or even when the disproportionation reaction is suppressed, the refrigerant performance required of the working medium for a refrigeration cycle is not sufficiently satisfied.

It should be noted that the present invention is not limited to the description of the above exemplary embodiments, and various changes are possible within the scope shown in the claims. Further, an exemplary embodiment obtained by appropriately combining technical means respectively disclosed in different exemplary embodiments and a plurality of modified examples is also included in the technical scope of the present invention.

### INDUSTRIAL APPLICABILITY

Disclosure of the present invention is suitably usable in a field of a working medium used for a refrigeration cycle and is also widely and suitably useable in a field of a refrigeration cycle system such as an air conditioning device (air conditioner), a refrigerator (for home or professional use), a dehumidifier, a showcase, an ice maker, a heat pump water heater, a heat pump washing machine and dryer combo, or a vending machine.

### REFERENCE MARKS IN THE DRAWINGS

10: air conditioning device (refrigeration cycle system)
11: indoor unit
12: outdoor unit
13: pipe
14: heat exchanger
15: heat exchanger
16: compressor
17: decompressor
18: four-way valve
20: refrigerator (refrigeration cycle system)
21: compressor
22: condenser
23: decompressor
24: evaporator
25: pipe

## Claims

1. A working medium for a refrigeration cycle, the working medium comprising three components:
(A) 1,1,2-trifluoroethylene and (B) difluoromethane as refrigerant components; and
(C) a haloalkane having 1 to 4 carbon atoms but excluding a case where one or more halogen atoms are all fluorine as a disproportionation inhibitor capable for suppressing a disproportionation reaction under higher than or equal to 150°C temperature conditions,
when a ternary phase diagram according to triangular coordinates (A, B, C) represents mass-ratio composition of the three components: (A) the 1,1,2-trifluoroethylene; (B) the difluoromethane; and (C) the haloalkane, the mass-ratio composition of the three components having a composition range that corresponds to a combined region formed of:
a first overlapping region where a region a and a region b overlap one another, with the region a representing more than 0 mass% and less than or equal to 65 mass% of (A) the 1,1,2-trifluoroethylene, and the region b representing more than 0 mass% and less than or equal to 30 mass% of (B) the difluoromethane; and
a second overlapping region where a region c and the region b overlap one another, with the region c representing more than or equal to 20 mass% and less than 100 mass% of (C) the haloalkane,
wherein the haloalkane is at least any selected from the group consisting of diiodomethane CH₂I₂, difluorodiiodomethane CF₂I₂, 1-bromo-2-iodotetrafluoroethane CF₂BrCF₂I, 1,1,1-trifluoro-2-iodoethane CF₃(CH₂)I, 1,1,1-trifluoro-3-iodopropane CF₃(CH₂)₂I, and 1,1,1-trifluoro-3-iodobutane CF₃(CH₂)₃I,
**characterized in that** the mass-ratio composition of the three components formed of (A) the 1,1,2-trifluoroethylene, (B) the difluoromethane, and (C) the haloalkane is
within a composition range corresponding to a region surrounded by:
a line L1 representing 30 mass% of (B) the difluoromethane;
a line L3 connecting between a point p2 as (A, B, C) = (65, 15, 20) and a point p3 as (A, B, C) = (65, 30, 5) on the line L1; and
a line L5 connecting between a point p6 as (A, B, C) = (50, 30, 20) on the line L1 and the point p2.

2. The working medium according to claim 1, wherein the mass-ratio composition of the three components formed of (A) the 1,1,2-trifluoroethylene, (B) the difluoromethane, and (C) the haloalkane is
within a composition range corresponding to a region surrounded by:
the line L1;
the line L5; and
a line L6 connecting between a point p7 as (A, B, C) = (60, 30, 10) on the line L1 and the point p2.

3. A refrigeration cycle system comprising the working medium according to claim 1 or 2.

## Patentansprüche

1. Arbeitsmedium für einen Kältekreislauf, wobei das Arbeitsmedium drei Komponenten umfasst:
(A) 1,1,2-Trifluorethylen und (B) Difluormethan als Kältemittelkomponenten; und
(C) ein Halogenalkan mit 1 bis 4 Kohlenstoffatomen, jedoch unter Ausschluss eines Falles, in dem ein oder mehrere Halogenatome alle Fluor sind, als Disproportionierungsinhibitor, der in der Lage ist, eine Disproportionierungsreaktion unter Temperaturbedingungen von höher als oder gleich 150 °C zu unterdrücken,
wobei, wenn ein ternäres Phasendiagramm gemäß Dreieckskoordinaten (A, B, C) die Massenverhältniszusammensetzung der drei Komponenten (A) 1,1,2-Trifluorethylen, (B) Difluormethan, und (C) Halogenalkan repräsentiert, die Massenverhältniszusammensetzung der drei Komponenten einen Zusammensetzungsbereich aufweist, der einer kombinierten Region entspricht, die gebildet ist aus:
einer ersten überlappenden Region, wobei eine Region a und eine Region b einander überlappen, wobei die Region a mehr als 0 Massen% und weniger als oder gleich 65 Massen% von (A) dem 1,1,2-Trifluorethylen repräsentiert und die Region b mehr als 0 Massen% und weniger als oder gleich 30 Massen% von (B) dem Difluormethan repräsentiert; und
einer zweiten überlappenden Region, wobei eine Region c und die Region b einander überlappen, wobei die Region c mehr als oder gleich 20 Massen% und weniger als 100 Massen% von (C) dem Halogenalkan repräsentiert,
wobei das Halogenalkan mindestens jedwedes ausgewählt aus der Gruppe bestehend aus Diiodmethan CH₂I₂, Difluordiiodmethan CF₂I₂, 1-Brom-2-iodtetrafluorethan CF₂BrCF₂I, 1,1,1-Trifluor-2-iodethan CF₃(CH₂)I, 1,1,1-Trifluor-3-iodpropan CF₃(CH₂)₂I und 1,1,1-Trifluor-3-iodbutan CF₃(CH₂)₃I ist,
**dadurch gekennzeichnet, dass** die Massenverhältniszusammensetzung der drei Komponenten, gebildet aus (A) dem 1,1,2-Trifluorethylen, (B) dem Difluormethan und (C) dem Halogenalkan, innerhalb eines Zusammensetzungsbereichs liegt, der einer Region entspricht, die umgeben ist von:
einer Linie L1, die 30 Massen% von (B) dem Difluormethan repräsentiert;
einer Linie L3, welche die Verbindung zwischen einem Punkt p2, wie (A, B, C) = (65, 15, 20), und einem Punkt p3, wie (A, B, C) = (65, 30, 5), auf der Linie L1 ist; und
einer Linie L5, welche die Verbindung zwischen einem Punkt p6, wie (A, B, C) = (50, 30, 20), auf der Linie L1 und dem Punkt p2 ist.

2. Arbeitsmedium nach Anspruch 1, wobei die Massenverhältniszusammensetzung der drei Komponenten, gebildet aus (A) dem 1,1,2-Trifluorethylen, (B) dem Difluormethan und (C) dem Halogenalkan, innerhalb eines Zusammensetzungsbereichs liegt, der einer Region entspricht, die umgeben ist von:
der Linie L1;
der Linie L5; und
einer Linie L6, welche die Verbindung zwischen einem Punkt p7, wie (A, B, C) = (60, 30, 10), auf der Linie L1 und dem Punkt p2 ist.

3. Kältekreislaufsystem, umfassend das Arbeitsmedium nach Anspruch 1 oder 2.

## Revendications

1. Fluide de travail pour un cycle de réfrigération, le fluide de travail comprenant trois constituants :
(A) du 1,1,2-trifluoroéthylène et (B) du difluorométhane en tant que constituants réfrigérants ; et
(C) un halogénoalcane comprenant 1 à 4 atomes de carbone, mais à l'exclusion d'un cas où un ou plusieurs atomes d'halogène sont tous du fluor, en tant qu'inhibiteur de dismutation capable de supprimer une réaction de dismutation dans des conditions de température supérieure ou égale à 150 °C,
lorsqu'un diagramme de phase ternaire selon des coordonnées triangulaires (A, B, C) représente une composition à rapport massique des trois constituants : (A) le 1,1,2-trifluoroéthylène ; (B) le difluorométhane ; et (C) l'halogénoalcane, la composition à rapport massique des trois constituants présente une plage de composition qui correspond à une région combinée formée de :
une première région de chevauchement où une région a et une région b se chevauchent, la région a représentant plus de 0 % en masse et étant inférieure ou égale à 65 % en masse de (A) le 1,1,2-trifluoroéthylène et la région b représentant plus de 0 % en masse et étant inférieure ou égale à 30 % en masse de (B) le difluorométhane ; et
une deuxième région de chevauchement où une région c et la région b se chevauchent, la région c étant supérieur ou égale à 20 % en masse et représentant moins de 100 % en masse de (C) l'halogénoalcane,
l'halogénoalcane étant au moins l'un quelconque choisi dans le groupe constitué par le diiodométhane CH₂I₂, le difluorodiiodométhane CF₂I₂, le 1-bromo-2-iodotétrafluoroéthane CF₂BrCF₂I, le 1,1,1-trifluoro-2-iodoéthane CF₃(CH₂)I, le 1,1,1-trifluoro-3-iodopropane CF₃(CH₂)₂I et le 1,1,1-trifluoro-3-iodobutane CF₃(CH₂)₃I,
**caractérisé en ce que** la composition à rapport massique des trois constituants formés de (A) le 1,1,2-trifluoroéthylène, (B) le difluorométhane et (C) l'halogénoalcane se trouve dans une plage de composition correspondant à une région entourée par :
une ligne L1 représentant 30 % en masse de (B) le difluorométhane ;
une ligne L3 reliant un point p2 en tant que (A, B, C) = (65, 15, 20) et un point p3 en tant que (A, B, C) = (65, 30, 5) sur la ligne L1 ; et
une ligne L5 reliant un point p6 en tant que (A, B, C) = (50, 30, 20) sur la ligne L1 et le point p2.

2. Fluide de travail selon la revendication 1, la composition à rapport massique des trois constituants formés de (A) le 1,1,2-trifluoroéthylène, (B) le difluorométhane et (C) l'halogénoalcane se trouvant dans une plage de composition correspondant à une région entourée par :
la ligne L1 ;
la ligne L5 ; et
une ligne L6 reliant un point p7 en tant que (A, B, C) = (60, 30, 10) sur la ligne L1 et le point p2.

3. Système à cycle de réfrigération comprenant le fluide de travail selon la revendication 1 ou 2.
